# EUROPÄISCHE PATENTSCHRIFT

(11) **EP 2 300 260 B1**
(45) Veröffentlichungstag und Bekanntmachung des Hinweises auf die Patenterteilung: **09.10.2013**
(21) Anmeldenummer: 09765747.2
(22) Anmeldetag: 03.06.2009
(51) Int. Cl.: B60K 37/06

(54) **VERFAHREN ZUM BETRIEB EINER STEUEREINRICHTUNG EINES KRAFTFAHRZEUGES UND STEUEREINRICHTUNG EINES KRAFTFAHRZEUGES ZUR DURCHFÜHRUNG DES VERFAHRENS**
METHOD FOR OPERATING A CONTROL DEVICE OF A MOTOR VEHICLE AND CONTROL DEVICE OF A MOTOR VEHICLE FOR CARRYING OUT THE METHOD
PROCEDE POUR FAIRE FONCTIONNER UN DISPOSITIF DE COMMANDE D'UN VEHICULE A MOTEUR ET DISPOSITIF DE COMMANDE D'UN VEHICULE A MOTEUR DESTINE A LA REALISATION DE CE PROCEDE

(30) Priorität: 17.06.2008 DE 102008028424
(43) Veröffentlichungstag der Anmeldung: 30.03.2011
(73) Patentinhaber: Continental Automotive GmbH, 30165 Hannover (DE)
(72) Erfinder: CIELER, Stephan, 60316 Frankfurt (DE); LENNINGER, Ralf, 97076 Würzburg (DE); MEIER-ARENDT, Guido, 63225 Langen (DE); MÖLL, Winfried, 35321 Laubach (DE)
(86) Internationale Anmeldenummer: PCT/EP2009/056805
(87) Internationale Veröffentlichungsnummer: WO 2009/153167

(56) Entgegenhaltungen:
- DE-A1- 10 323 723
- GB-A- 2 336 221
- GB-A- 2 434 880
- US-A1- 2002 096 572

## Beschreibung

Die Erfindung betrifft ein Verfahren zum Betrieb einer Steuereinrichtung eines Kraftfahrzeuges zur Ansteuerung einer Innenraumsteuereinrichtung und zusätzlich einer Kraftübertragungseinrichtung und einer Fahrgestellsteuereinrichtung mit einem zentralen Bedienelement zur Auswahl von Funktionen der Einrichtungen. Weiterhin betrifft die Erfindung eine Steuereinrichtung eines Kraftfahrzeuges zur Durchführung des Verfahrens zur Ansteuerung einer Innenraumsteuereinrichtung und zusätzlich einer Kraftübertragungseinrichtung und einer Fahrgestellsteuereinrichtung mit einem zentralen Bedienelement zur Auswahl von Funktionen der Einrichtungen.

Heutige Kraftfahrzeuge weisen eine Vielzahl von Einrichtungen auf, an welche von unterschiedlichen Fahrern und in verschiedenen Fahrsituationen unterschiedliche Anforderungen gestellt werden. Eine Ansteuerung der verschiedenen Einrichtungen mit jeweils einer separaten Steuereinrichtung und eigenen Bedienelementen hat sich als sehr aufwändig und verwirrend für den Fahrer des Kraftfahrzeuges erwiesen.

Aus der Praxis ist daher ein Kraftfahrzeug bekannt geworden, bei dem eine Steuereinrichtung mit einem einzigen Bedienelement zur Ansteuerung der verschiedenen Einrichtungen vorgesehen ist. Damit kann in einer ersten Auswahl die gewünschte Einrichtung angesteuert und in einer zweiten Auswahl die Funktion der jeweiligen Einrichtungen ausgewählt werden. Dies führt jedoch ebenfalls zu einer aufwändigen Bedienung verschiedener Einrichtungen.

Dokument GB-2 336 221 beinhaltet ein Verfahren mit den Merkmalen des Oberbegriffs des Anspruchs 1 bzw. eine Steuereinrichtung mit den Merkmalen des Oberbegriffs des Anspruchs 10.

Der Erfindung liegt das Problem zugrunde, ein Verfahren der eingangs genannten Art so weiter zu bilden, dass es eine besonders einfache Ansteuerung der verschiedenen Einrichtungen ermöglicht. Weiterhin soll eine besonders einfach aufgebaute Steuereinrichtung zur Durchführung des Verfahrens geschaffen werden.

Das erstgenannte Problem wird erfindungsgemäß dadurch gelöst, dass jeweils Funktionen aller drei genannten Einrichtungen zu einzelnen Funktionsklassen zusammengefasst werden und dass den Funktionen der Funktionsklassen unterschiedliche Grundeinstellungen zugewiesen werden und dass die Funktionsklassen in einer ersten Auswahl durch das Bedienelement ausgewählt werden.

Durch diese Gestaltung ermöglicht das erfindungsgemäße Verfahren die gleichzeitige Ansteuerung aller drei genannten Einrichtungen durch einmaliges Betätigen des Bedienelementes. Die Funktionsklassen lassen sich sinnvoll auf verschiedene Anforderungen auslegen und die Funktionen der drei genannten Einrichtungen den Anforderungen entsprechenden Grundeinstellungen zuweisen. Damit könnten beispielsweise für eine Urlaubsfahrt oder eine sportliche Bergfahrt unterschiedliche Funktionsklassen erzeugt werden, die vom Fahrer bei der entsprechenden Fahrsituation einfach ausgewählt werden. Anschließend wird sowohl die Kraftübertragungseinrichtung, wie Motorsteuerung und eine Getriebeautomatik, die Fahrgestellsteuereinrichtung mit der Federung und der Bodenfreiheit des Kraftfahrzeuges und die Innenraumsteuereinrichtung mit Beleuchtung, Klimaanlage, Radio und verschiedenen Anzeigeeinrichtungen in die den Funktionsklassen vorgegebenen Grundeinstellungen geschaltet. Hierzu genügt erfindungsgemäß ein einfaches Auswählen der Funktionsklasse durch den Fahrer des Kraftfahrzeuges.

Die einzelnen Funktionen der Funktionsklassen lassen sich gemäß einer anderen vorteilhaften Weiterbildung der Erfindung einfach individuell ansteuern, wenn nach der ersten Auswahl der Funktionsklassen durch das Bedienelement in einer zweiten Auswahl die einzelnen Funktionen der Funktionsklassen ansteuerbar sind. Durch diese Gestaltung können die Grundeinstellungen der einzelnen Funktionen geändert und auf die einzelnen Einrichtungen auf die individuellen Vorgaben des Fahrers angepasst werden.

Durch einfaches einmaliges Betätigen des Bedienelementes lässt sich das Kraftfahrzeug besonders ökonomisch betreiben, wenn in einer der Funktionsklassen eine verminderte Motorleistung eine hohe Getriebeübersetzung, eine harte Einstellung des Fahrgestells des Kraftfahrzeuges, eine Abschaltung eines Kompressors einer Klimaanlage als Grundeinstellungen zugewiesen sind. Zusätzlich können großformatige Anzeigeeinrichtungen und deren Hintergrundbeleuchtung deaktiviert werden. Eine solche Funktionsklasse kann als ökonomisch in der Steuereinrichtung gekennzeichnet werden. In einer alternativen Ausführungsform lassen sich eine hohe Motorleistung und eine sportlich eingestellte Getriebeübersetzung als weitere, sportlich gekennzeichnete Funktionsklasse ablegen.

Ein versehentlicher Betrieb des Kraftfahrzeuges mit einem hohen Kraftstoffverbrauch lässt sich gemäß einer anderen vorteilhaften Weiterbildung der Erfindung einfach vermeiden, wenn ein Hinweis für den Fahrer des Kraftfahrzeuges angezeigt wird, wenn er eine ökonomisch optimierte Funktionsklasse verlässt. Vorzugsweise wird der Wechsel der Funktionsklasse auch mit einer aktiven Abfrage an den Fahrer, ob der Wechsel wirklich gewünscht ist, gekoppelt.

Durch einmaliges Betätigen des Bedienelementes lässt sich das Kraftfahrzeug besonders komfortabel, insbesondere für ältere Menschen betreiben, wenn in einer der Funktionsklassen ein besonders geringer Funktionsumfang, eine besonders weiche Einstellung des Fahrgestells und eine Verringerung der maximalen Motordrehzahl als Grundeinstellungen zugewiesen sind. Eine solche Funktionsklasse kann als Komfortstellung in der Steuereinrichtung abgelegt werden.

Bei einem Betrieb des Kraftfahrzeuges mit verschiedenen Fahrern lässt sich ein umfangreiches Profil einfach durch einmaliges Betätigen des Bedienelementes ansteuern, wenn in einer der Funktionsklassen individuell auf den Fahrer eingestellte Grundeinstellungen aller genannten Einrichtungen zugewiesen sind. Hierdurch lässt sich in der Steuereinrichtung ein spezielles Fahrerprofil erzeugen, welches individuell vom Fahrer ausgewählt werden kann. Vorzugweise lässt sich hierdurch auch die Position von Lenkrad und Fahrersitz über die Innenraumsteuereinrichtung festlegen.

Eine aufwändige Programmierung der Steuereinrichtung lässt sich gemäß einer anderen vorteilhaften Weiterbildung der Erfindung einfach vermeiden, wenn die Steuereinrichtung aus Handlungen des Fahrers ein Fahrerprofil ermittelt und aus dem Fahrerprofil eine individuell dem Fahrer entsprechende Funktionsklasse erstellt.

Bei einer Benutzung des Kraftfahrzeuges von verschiedenen Fahrern lässt sich die individuell auf den jeweiligen Fahrer angepasste Funktionsklasse gemäß einer anderen vorteilhaften Weiterbildung der Erfindung einfach auswählen, wenn die Steuereinrichtung mit einer Erfassungsvorrichtung zur Ermittlung biometrischer Daten zur Identifizierung des Fahrers verbunden ist.

Die Bedienung der Steuereinrichtung des Kraftfahrzeuges lässt sich gemäß einer anderen vorteilhaften Weiterbildung der Erfindung weiter vereinfachen, wenn ein Erscheinungsbild einer Anzeigeeinrichtung zur Anzeige von Informationen im Kraftfahrzeug in Abhängigkeit von den ausgewählten Funktionsklassen umgeschaltet wird. Durch diese Gestaltung ist es beispielsweise möglich, für ältere Fahrer des Kraftfahrzeuges eine besonders komfortable Funktionsklasse zusammenzustellen, in der eine großformatige Darstellung von Informationen auf der Anzeigeeinrichtung erzeugt wird, gleichzeitig das Fahrgestell auf komfortable Federung und ein Automatikgetriebe auf frühzeitiges Hochschalten eingestellt wird. Zudem ist es hierdurch möglich, eine sportlich oder eine ökologisch ausgerichtete Funktionsklasse auch für den Fahrer in einer Grundeinstellung der Anzeigeeinrichtung optisch darzustellen.

Das zweit genannte Problem, nämlich die Schaffung einer besonders einfach aufgebauten Steuereinrichtung zur Durchführung des Verfahrens wird erfindungsgemäß dadurch gelöst, dass mehrere Funktionen der drei genannten Einrichtungen zu Funktionsklassen zusammengefasst sind, dass die Funktionsklassen unterschiedliche Grundeinstellungen der Funktionen der verschiedenen Einrichtungen aufweisen und dass das Bedienelement in einer ersten Stellung zur Auswahl von Funktionsklassen ausgebildet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch ein Kraftfahrzeug mit verschiedenen Einrichtungen und einer Steuereinrichtung zur Ansteuerung der Einrichtungen,
- Fig. 2: schematisch einen Schaltplan der Steuereinrichtung mit den verschiedenen Einrichtungen aus Figur 1,
- Fig. 3: ein Flussdiagramm eines erfindungsgemäßen Verfahrens zur Ansteuerung der Steuereinrichtung aus Figur 1.

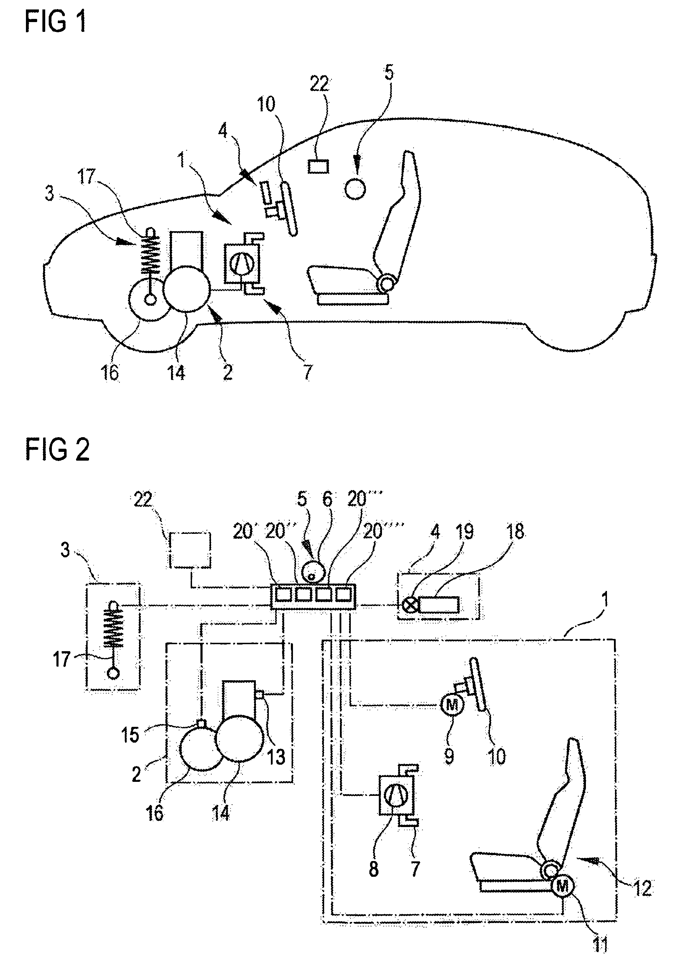

Figur 1 zeigt schematisch ein Kraftfahrzeug mit verschiedenen Einrichtungen, wie einer Innenraumsteuereinrichtung 1, einer Kraftübertragungseinrichtung 2, einer Fahrgestellsteuereinrichtung 3 und einer Anzeigeeinrichtung 4 und einer Steuereinrichtung 5 zur Ansteuerung der Einrichtungen 1 - 4. In einer alternativen, nicht dargestellten Ausführungsform kann die Anzeigeeinrichtung 4 Teil der Innenraumsteuereinrichtung 1 sein.

Figur 2 zeigt schematisch einen Schaltplan zur Ansteuerung der verschiedenen Einrichtungen 1 - 4 mittels eines Bedienelementes 6 der Steuereinrichtung 5. Die Innenraumsteuereinrichtung 1 weist eine Klimaanlage 7 mit einem Kompressor 8, eine Verstelleinrichtung 9 für ein Lenkrad 10 und eine Vertelleinrichtung 11 für einen Fahrersitz 12 auf. Die Kraftübertragungseinrichtung 2 hat eine Motorsteuerung 13 zur Steuerung der Drehzahl und einer Motorleistung einer Brennkraftmaschine 14 des Kraftfahrzeuges und eine Getriebesteuereinrichtung 15. Mittels der Getriebesteuereinrichtung 15 lässt sich ein Getriebe 16 ansteuern und beispielsweise deren Schaltpunkte festlegen. Für die Fahrgestellsteuereinrichtung 3 ist beispielhaft ein Federbein 17 dargestellt, mit dem sich in Abhängigkeit von den Signalen der Steuereinrichtung 5 die Federeigenschaften des Kraftfahrzeuges festlegen lassen. Die Anzeigeeinrichtung 4 hat beispielhaft eine einzige Anzeigetafel 18 mit einer Hintergrundbeleuchtung 19 zur Darstellung von Informationen. Selbstverständlich können auch weitere, nicht dargestellte Anzeigetafeln, Bildabspielgeräte oder dergleichen in dem Kraftfahrzeug angeordnet und als Teil der Anzeigeeinrichtung von der Steuereinrichtung ansteuerbar sein.

Verschiedene Grundeinstellungen von einzelnen Funktionen der verschiedenen Einrichtungen 1 - 4 sind in der Steuereinrichtung 5 zu Funktionsklassen 20' - 20"" zusammengefasst. Damit können durch Auswahl einer der Funktionsklassen 20' - 20"" mittels des Bedienelementes 6 gleichzeitig alle Einrichtungen 1 - 4 angesteuert werden.

Weiterhin zeigen die Figuren 1 und 2, dass in dem Kraftfahrzeug eine mit der Steuereinrichtung 5 verbundene Erfassungsvorrichtung 22 zur Erfassung biometrischer Daten zur Identifizierung des Fahrers angeordnet ist. Damit lassen sich mehrere, individuell auf verschiedene Fahrer angepasste Funktionsklassen 20"" abspeichern und nach der Identifizierung des jeweiligen Fahrers aufrufen. Bei der Erfassungsvorrichtung 22 kann es sich beispielsweise um eine Vorrichtung zur Erkennung des Fingerabdrucks oder dergleichen handeln.

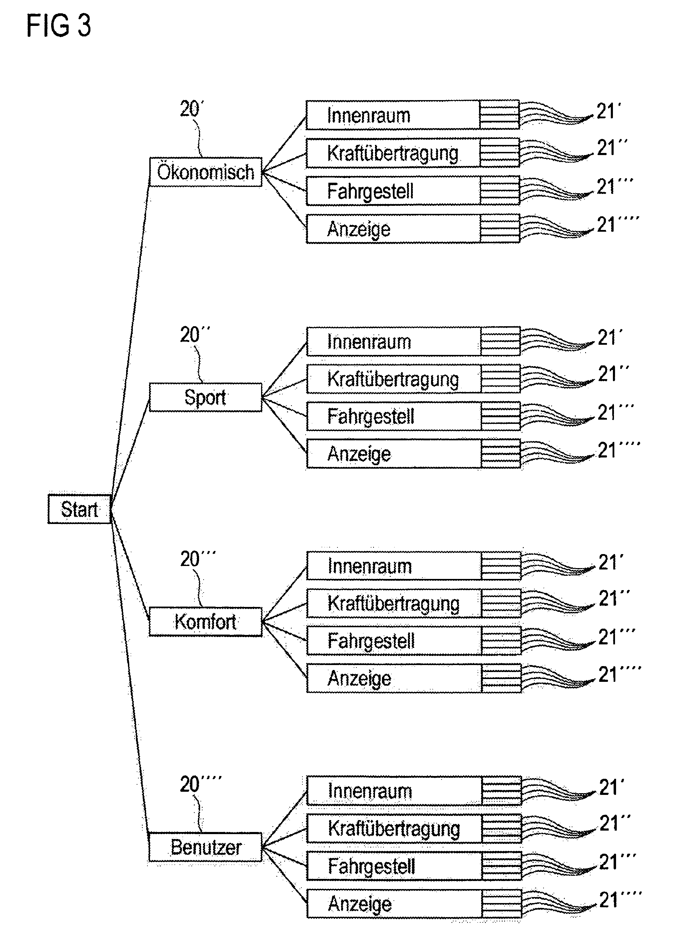

Figur 3 zeigt schematisch ein Flussdiagramm des Verfahrens zur Ansteuerung der Steuereinrichtung 5 aus den Figuren 1 und 2. Ausgehend von einem Start lassen sich die verschiedenen beispielhaft mit ökonomisch, Sport, Komfort und Benutzer gekennzeichneten Funktionsklassen 20' - 20"" in einer ersten Auswahl ansteuern. Durch die Auswahl werden Grundeinstellungen von Funktionen 21' - 21"" der verschiedenen Einrichtungen 1 - 4 aktiviert. Die Funktionen 21' - 21"" können bei Bedarf in einer zweiten Auswahl einzeln geändert werden.

## Patentansprüche

1. Verfahren zum Betrieb einer Steuereinrichtung (5) eines Kraftfahrzeuges zur Ansteuerung einer Innenraumsteuereinrichtung (1), einer Kraftübertragungseinrichtung (2) und einer Fahrgestellsteuereinrichtung (3) mit einem zentralen Bedienelement (6) zur Auswahl von Funktionen der Einrichtungen (1 - 3), **dadurch gekennzeich- net**, dass jeweils Funktionen aller drei genannten Einrichtungen (1 - 3) zu einzelnen Funktionsklassen (20' - 20'''') zusammengefasst werden und dass den Funktionen der Funktionsklassen (20' - 20'''') unterschiedliche Grundeinstellungen zugewiesen werden und dass die Funktionsklassen (20' - 20'''') in einer ersten Auswahl durch das Bedienelement (6) ausgewählt werden.

2. Verfahren nach Anspruch 1, **dadurch gekenn**- **zeichnet**, dass nach der ersten Auswahl der Funktionsklassen durch das Bedienelement in einer zweiten Auswahl die einzelnen Funktionen der Funktionsklassen ansteuerbar sind.

3. Verfahren nach Anspruch 1 oder 2, **dadurch gekennzeichnet, dass** in einer der Funktionsklassen eine verminderte Motorleistung, eine hohe Getriebeübersetzung, eine harte Einstellung des Fahrgestells des Kraftfahrzeuges, eine Abschaltung eines Kompressors einer Klimaanlage als Grundeinstellungen zugewiesen sind.

4. Verfahren nach einem der vorhergehenden Ansprüche, **dadurch gekennzeichnet dass** ein Hinweis für den Fahrer des Kraftfahrzeuges angezeigt wird, wenn er eine ökonomisch optimierte Funktionsklasse verlässt.

5. Verfahren nach einem der vorhergehenden Ansprüche, **dadurch gekennzeichnet, dass** in einer der Funktionsklassen ein besonders geringer Funktionsumfang, eine besonders weiche Einstellung des Fahrgestells und eine Verringerung der maximalen Motordrehzahl als Grundeinstellungen zugewiesen sind.

6. Verfahren nach einem der vorhergehenden Ansprüche, **dadurch gekennzeichnet, dass** in einer der Funktionsklassen individuell auf den Fahrer eingestellte Grundeinstellungen aller genannten Einrichtungen zugewiesen sind.

7. Verfahren nach einem der vorhergehenden Ansprüche, **dadurch gekennzeichnet, dass** die Steuereinrichtung aus Handlungen des Fahrers ein Fahrerprofil ermittelt und aus dem Fahrerprofil eine individuell dem Fahrer entsprechende Funktionsklasse erstellt.

8. Verfahren nach einem der vorhergehenden Ansprüche, **dadurch gekennzeichnet, dass** die Steuereinrichtung mit einer Erfassungsvorrichtung zur Ermittlung biometrischer Daten zur Identifizierung des Fahrers verbunden ist.

9. Verfahren nach einem der vorhergehenden Ansprüche, **dadurch gekennzeichnet, dass** ein Erscheinungsbild einer Anzeigeeinrichtung zur Anzeige von Informationen im Kraftfahrzeug in Abhängigkeit von den ausgewählten Funktionsklassen umgeschaltet wird.

10. Steuereinrichtung (5) eines Kraftfahrzeuges zur Durchführung des Verfahrens nach einem der vorhergehenden Ansprüche zur Ansteuerung einer Innenraumsteuereinrichtung (1), einer Kraftübertragungseinrichtung (2) und einer Fahrgestellsteuereinrichtung (3) mit einem zentralen Bedienelement (6) zur Auswahl von Funktionen der Einrichtungen (1 -3), **dadurch gekennzeichnet, dass** mehrere Funktionen der drei genannten Einrichtungen (1 - 3) zu Funktionsklassen (20' - 20'''') zusammengefasst sind, dass die Funktionsklassen (20' - 20'''') unterschiedliche Grundeinstellungen der Funktionen (21' - 21''') der verschiedenen Einrichtungen (1 - 3) aufweisen und dass das Bedienelement (6) in einer ersten Stellung zur Auswahl von Funktionsklassen (20' - 20'''') ausgebildet ist.

## Claims

1. Method for operating a control unit (5) of a motor vehicle for activating an interior control unit (1), a power transmission unit (2) and a chassis control unit (3) having a central operating element (6) for selecting functions of the units (1 - 3), **characterized in that** respective functions of all three units (1 - 3) mentioned are grouped into individual function classes (20' - 20""), and **in that** the functions of the function classes (20' - 20'''') are assigned different basic settings, and **in that**, in an initial selection, the function classes (20' - 20'''') are selected by means of the operating element (6).

2. Method according to Claim 1, **characterized in that**, after the initial selection of the function classes by means of the operating element, the individual functions of the function classes can be activated in a second selection.

3. Method according to Claim 1 or 2, **characterized in that**, in one of the function classes, a reduced engine power, a high transmission ratio, a hard setting of the chassis of the motor vehicle, and a shutdown of a compressor of an air conditioning system are assigned as basic settings.

4. Method according to one of the preceding claims, **characterized in that** an indication for the driver of the motor vehicle is displayed if he leaves an economically optimized function class.

5. Method according to one of the preceding claims, **characterized in that**, in one of the function classes, a particularly narrow range of functions, a particularly soft setting of the chassis and a reduction in the maximum engine speed are assigned as basic settings.

6. Method according to one of the preceding claims, **characterized in that**, in one of the function classes, basic settings adjusted to the individual driver are assigned for all the units mentioned.

7. Method according to one of the preceding claims, **characterized in that** the control unit determines a driver profile from actions of the driver and, from the driver profile, sets up a function class corresponding to the individual driver.

8. Method according to one of the preceding claims, **characterized in that** the control unit is connected to a detection device for determining biometric data for identifying the driver.

9. Method according to one of the preceding claims, **characterized in that** an image on a display unit for displaying information in the motor vehicle is switched over in accordance with the function classes selected.

10. Control unit (5) of a motor vehicle for carrying out the method according to one of the preceding claims for activating an interior control unit (1), a power transmission unit (2) and a chassis control unit (3) having a central operating element (6) for selecting functions of the units (1 - 3), **characterized in that** a plurality of functions of the three units (1 - 3) mentioned are grouped into function classes (20' - 20''''), **in that** the function classes (20' - 20'''') have different basic settings of the functions (21' - 21''') of the various units (1 - 3), and **in that**, in an initial position, the operating element (6) is designed to select function classes (20' - 20'''').

## Revendications

1. Procédé pour faire fonctionner un dispositif (5) de commande d'un véhicule automobile pour la commande d'un dispositif (1) d'habitacle, d'un dispositif (2) de transmission de force et d'un dispositif (3) de commande de châssis, comprenant un élément (6) central de manoeuvre pour la sélection de fonctions des dispositifs (1 à 3), **caractérisé en ce que** respectivement, des fonctions de tous les trois dispositifs (1 à 3) mentionnés sont rassemblées en des classes (20' à 20'''') individuelles de fonction et **en ce qu'**aux fonctions des classes (20' à 20'''') de fonction sont affectés des réglages de base différents et **en ce que** les classes (20' à 20'''') de fonction sont choisies dans un premier choix par l'élément (6) de manoeuvre.

2. Procédé suivant la revendication 1, **caractérisé en ce qu'**après le premier choix des classes de fonction par l'élément de manoeuvre, les fonctions individuelles des classes de fonction peuvent être commandées dans un deuxième choix.

3. Procédé suivant les revendications 1 ou 2, **caractérisé en ce que**, dans l'une des classes de fonction, une puissance diminuée du moteur, une grande réduction de boîte de vitesse, un réglage dur du châssis du véhicule automobile, un arrêt d'un compresseur d'une installation de conditionnement d'air sont affectés en tant que réglages de base.

4. Procédé suivant l'une des revendications précédentes, **caractérisé en ce qu'**il est indiqué au conducteur du véhicule automobile s'il quitte une classe de fonction optimisée économiquement.

5. Procédé suivant l'une des revendications précédentes, **caractérisé en ce que**, dans l'une des classes de fonction, un panel de fonctions particulièrement petit, un réglage particulièrement doux du châssis et une diminution du régime maximum du moteur sont affectés en tant que réglages de base.

6. Procédé suivant l'une des revendications précédentes, **caractérisé en ce, que** dans l'une des classes de fonction, il est affecté des réglages de base, réglés par le conducteur, de tous les dispositifs mentionnés.

7. Procédé suivant l'une des revendications précédentes, **caractérisé en ce que** le dispositif de commande détermine, à partir de manipulations du conducteur, un profil de conducteur et établit, à partir du profil de conducteur, une classe de fonction correspondant individuellement au conducteur.

8. Procédé suivant l'une des revendications précédentes, **caractérisé en ce que** le dispositif de commande est relié à un dispositif de détection pour la détermination de données biométriques en vue de l'identification du conducteur.

9. Procédé suivant l'une des revendications précédentes, **caractérisé en ce qu'**une image d'un dispositif d'affichage, pour l'affichage d'informations dans le véhicule automobile, est commutée en fonction des classes de fonction choisies.

10. Dispositif (5) de commande d'un véhicule automobile pour effectuer le procédé suivant l'une des revendications précédentes de commande d'un dispositif (1) de commande d'habitacle, d'un dispositif (2) de transmission de force et d'un dispositif (3) de commande de châssis, ayant un élément (6) central de manoeuvre pour le choix de fonctions des dispositifs (1 à 3), **caractérisé en ce que** plusieurs fonctions des trois dispositifs (1 à 3) mentionnés sont rassemblées en des classes (20' à 20"") de fonction, **en ce que** les classes (20' à 20'''') de fonction ont des réglages de base différents des fonctions (21' à 21''') des dispositifs (1 à 3) différents et **en ce que** l'élément (6) de manoeuvre est constitué dans une première position pour le choix de classes (20' à 20'''') de fonction.
